# EUROPEAN PATENT APPLICATION

(11) **EP 3 614 011 A1**
(43) Date of publication of application: **26.02.2020**
(21) Application number: 18213571.5
(22) Date of filing: 18.12.2018
(51) Int. Cl.: F16F 9/04

(54) **CRIMP ADAPTER ASSEMBLY FOR AIR SHOCK**

(30) Priority: 23.08.2018 US 201862721838 P; 15.11.2018 US 201816191634
(71) Applicant: Arnott T&P Holding, LLC, Merritt Island FL 32953 (US)
(72) Inventor: Kirar, Matt Edward, Florida 32953 (US)
(74) Representative: MacLachlan & Donaldson

(57) **Abstract**

Assemblies, systems, devices, and methods for disassembling an original equipment manufacturer (OEM) air shocks/air springs and replacing the inflatable bag/bladders and adding a crimp ring adapter (130) to a top mount in order to reassemble and remanufacture the air shock/air spring with a new inflatable bag/bladder (110) as an effective high quality and good reliability OEM replacement part. The existing air bladder is substantially cut out form the OEM air shocks/air springs, leaving a portion of the existing air bladder left inside of the remanufactured air shock/air spring.

## Description

### RELATED APPLICATIONS

This application claims the benefit of priority of U.S. Provisional Patent Application Serial No. 62/721,838 filed August 23, 2018, which is incorporated by reference in its' entirety.

### FIELD OF INVENTION

This invention relates to air shocks/springs, and in particular to assemblies, systems, devices, and methods for disassembling an original equipment manufacturer (OEM) air shocks/air springs and replacing the inflatable bag/bladders and adding a crimp ring adapter to a top mount in order to reassemble and remanufacture the air shock/air spring with a new inflatable bag/bladder as an effective high quality and good reliability OEM replacement part.

### BACKGROUND AND PRIOR ART

Original Equipment Manufacturer (OEM) parts such as air shocks and air springs used in motor vehicles have parts that can wear out over time. For example, the existing air spring type bladder can wear out over time and leak causing the air shock to fail and the entire air shock/air spring would then need to be replaced.

Replacing original OEM air shocks/air springs can be very expensive to be replaced. For example, a Mercedes-Benz E-Class W212 air spring can be a very expensive part to be replaced.

Owners of these types of vehicle typically have to buy Mercedes Benz parts from the dealers for these vehicles which can be very expensive in the several hundreds of dollars or more for a single OEM part. The costs can be compounded when having to replace plural OEM air shocks/ air springs on a single vehicle.

While there are cheap knock-offs available, the problem with the cheaper knock-offs is the lower quality and poor reliability of the knock-off products.

Thus, the need exists for solutions to the above problems with the prior art.

### SUMMARY OF THE INVENTION

A primary objective of the present invention is to provide assemblies, systems, devices, and methods for disassembling an original equipment manufacturer (OEM) air shocks/air springs and replacing the inflatable bag/bladders and adding a crimp ring adapter to a top mount in order to reassemble and remanufacture the air shock/air spring with a new inflatable bag/bladder as an OEM replacement part having good quality and reliability.

A secondary objective of the present invention is to provide assemblies, systems, devices, and methods for disassembling original equipment manufacturer (OEM) air shocks/air springs and re-assembling and remanufacturing the air shocks/air springs with an adapter that allows a new air spring bladder/bag to seal to a top mount of the air shock/air spring with an upper crimp ring assembly.

A preferred embodiment of a remanufactured air shock, can include a top mount having a closed outer end and an opposite end having a cavity with an existing crimp ring inside of the top mount, a lower shock assembly, a piston between the lower shock assembly and the top mount, a replacement air spring bladder having a lower end attached to the piston, and an upper end, and a crimp adapter ring assembly for attaching the upper end of the replacement air spring bladder inside of the cavity, wherein the crimp adapter ring assembly is used for replacing an existing OEM (original equipment manufacturer) air spring bladder with the replacement air spring bladder.

The remanufactured air shock can include a lower crimp ring for attaching the lower end of the replacement air spring bladder to the piston assembly.

The crimp ring adapter assembly can include a crimp adapter having a lower neck portion, and an upper end with external threads thereon, the upper end of the replacement air spring bladder being attached to the lower neck portion of the crimp adapter by another crimp ring, and an upper crimp ring having internal threads for threading about the external threads on the crimp adapter, the upper crimp ring having an outer groove which is snapable about the existing crimp ring inside of the top mount.

The remanufactured air shock can include a lower crimp ring for attaching the lower end of the replacement air spring bladder to the piston assembly, and wherein the crimp ring adapter assembly includes a crimp adapter having a lower neck portion, and an upper end with external threads thereon, the upper end of the replacement air spring bladder being attached to the lower neck portion of the crimp adapter by another crimp ring, and an upper crimp ring having internal threads for threading about the external threads on the crimp adapter, the upper crimp ring having an outer groove which is snapable about the existing crimp ring inside of the top mount.

A portion of the existing OEM air spring bladder remains inside of the remanufactured air shock, and wherein a remaining portion of the existing OEM air spring bladder is cut out from the remanufactured air shock.

A method of disassembling and remanufacturing an air shock, can include the steps of providing an OEM (original equipment manufacturer) air shock assembly with a top mount and a lower mount and a piston assembly, providing the OEM air shock assembly with an OEM air spring bag having an upper end attached inside of the top mount and a bottom end attached to the piston assembly, and replacing the OEM air spring bag with a replacement air spring bag so that a remanufactured air shock is assembled.

The replacing step can include the step of cutting an upper end portion of the OEM air bag from an internal crimp ring inside of the top mount, and leaving a remnant of the OEM air bag inside the top mount.

The replacing step can include the step of providing a lower crimp ring for attaching a lower end of the replacement air spring bladder to the piston assembly.

The replacing step can include the step of providing a crimp adapter having a lower neck portion and an upper end with external threads thereon, attaching the upper end of the air spring bladder to the lower neck portion of the crimp adapter by another crimp ring, providing an upper crimp ring having internal threads for threading about the external threads on the upper end of the crimp adapter, the upper crimp ring having an outer groove, pushing the upper end of the crimp adapter with the upper crimp ring into a lower cavity of the top mount, and snapping the outer groove of the internal crimp ring inside of the top mount which results in a remanufactured air shock assembly.

A remanufactured air spring using most parts of an existing air spring, can include an existing top mount of the existing air spring having an outer end and an opposite end having a cavity with an existing crimp ring inside of the top mount, an existing lower shock assembly of the existing air spring, an existing piston between the existing lower shock assembly and the existing top mount, a replacement air spring bladder having a lower end attached to the existing piston, and an upper end, and a crimp adapter ring assembly for attaching the upper end of the replacement air spring bladder inside of the cavity of the existing air spring, while allowing a portion of an existing air spring bladder to remain inside of the existing top mount of the existing air spring.

The remanufactured air spring can include a lower crimp ring for attaching the lower end of the replacement air spring bladder to the existing piston assembly.

The crimp ring adapter assembly can include a crimp adapter having a lower neck portion, and an upper end with external threads thereon, the upper end of the replacement air spring bladder being attached to the lower neck portion of the crimp adapter by another crimp ring, and an upper crimp ring having internal threads for threading about the external threads on the crimp adapter, the upper crimp ring having an outer groove which is snapable about the existing crimp ring inside of the top mount of the existing air spring.

The remanufactured air spring can further include a lower crimp ring for attaching the lower end of the replacement air spring bladder to the existing piston assembly, and wherein the crimp ring adapter assembly can include a crimp adapter having a lower neck portion, and an upper end with external threads thereon, the upper end of the replacement air spring bladder being attached to the lower neck portion of the crimp adapter by another crimp ring, and an upper crimp ring having internal threads for threading about the external threads on the crimp adapter, the upper crimp ring having an outer groove which is snapable about the existing crimp ring inside of the existing top mount of the existing air spring.

A remaining portion of the existing OEM air spring bladder can be cut out from the existing top mount for the remanufactured air spring.

Further objects and advantages of this invention will be apparent from the following detailed description of the presently preferred embodiments which are illustrated schematically in the accompanying drawings.

### BRIEF DESCRIPTION OF THE FIGURES

The drawing figures depict one or more implementations in accord with the present concepts, by way of example only, not by way of limitations. In the figures, like reference numerals refer to the same or similar elements.
FIG. 1 is an upper front right perspective view of a prior art, original equipment manufacturer (OEM) air shock/air spring.
FIG. 2 is a top view of the (OEM) air shock/air spring of FIG. 1.
FIG. 3 is a front view of the (OEM) air shock/air spring of FIG. 1.
FIG. 4 is a cross-sectional view of the (OEM) air shock/air spring of FIG. 2 along arrows 4X.
FIG. 4A is an enlarged view of a portion of the cross-sectional view of FIG. 4.
FIG. 5 is an exploded perspective view of the (OEM) air shock/air spring of FIG. 1.
FIG. 6 is an upper front right perspective view of an assembled air shock/air spring replacement using the novel adapter ring assembly.
FIG. 7 is a top view of the assembled replacement air shock/air spring of FIG. 6.
FIG. 8 is a front view of the assembled replacement air shock/air spring of FIG. 6.
FIG. 9 is a cross-sectional view of the assembled replacement air shock/air spring of FIG. 7 along arrows 9X.
FIG. 9A is an enlarged view of a portion of the cross-sectional view of FIG. 9.
FIG. 10 is an exploded perspective view of the air shock/air spring of FIG. 6.
FIG. 11 is an enlarged perspective view of the crimp adapter part of the air shock/air spring of FIG. 10.
FIG. 12 is an enlarged perspective view of the inner crimp ring adapter part of the air shock/air spring of FIG. 10.
FIG. 13 is an exploded view of the air shock/air spring, crimp ring and crimp adapter before the air shock/air spring is attached to the crimp adapter.
FIG. 13A is an assembled view of the air shock/air spring, crimp ring and crimp adapter of FIG. 13.
FIG. 14 is a perspective view of the inner crimp ring adapter.
FIG. 14A is another perspective view of the inner crimp ring adapter of FIG. 14 showing pressure arrows applied at the top and bottom.
FIG. 15 is an exploded perspective view of the crimp ring adapter positioned to be inserted into the OEM top mount, with the OEM top mount shown in partial cross-section.
FIG. 15A is an assembled perspective view of the crimp ring adapter inserted into the OEM top mount of FIG. 15.
FIG. 16A is an exploded perspective view of the assembled air shock/air spring, crimp ring and crimp adapter of FIG. 13A about to be positioned into the assembled crimp ring adapter and OEM top mount of FIG. 15A.
FIG. 16B is a perspective view showing the exterior threads of the air spring/crimp adapter assembly are starting to engage the interior threads of the inner crimp adapter of FIG. 16A.
FIG. 16C is a perspective view of the air spring/crimp adapter assembly having been threaded into the inner crimp adapter that was previously secured into the OEM top mount.

### DESCRIPTION OF THE PREFERRED EMBODIMENTS

Before explaining the disclosed embodiments of the present invention in detail it is to be understood that the invention is not limited in its applications to the details of the particular arrangements shown since the invention is capable of other embodiments. Also, the terminology used herein is for the purpose of description and not of limitation.

In the Summary above and in the Detailed Description of Preferred Embodiments and in the accompanying drawings, reference is made to particular features (including method steps) of the invention. It is to be understood that the disclosure of the invention in this specification does not include all possible combinations of such particular features. For example, where a particular feature is disclosed in the context of a particular aspect or embodiment of the invention, that feature can also be used, to the extent possible, in combination with and/or in the context of other particular aspects and embodiments of the invention, and in the invention generally.

In this section, some embodiments of the invention will be described more fully with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will convey the scope of the invention to those skilled in the art. Like numbers refer to like elements throughout, and prime notation is used to indicate similar elements in alternative embodiments.

A list of components will now be described.
10 OEM air shock/air spring assembly
20 OEM top mount
30 OEM lower mount (shock assembly)
40 OEM piston
50 OEM air spring/bag/bladder
60 OEM crimp ring attaches the air spring bladder/bag 50 to the piston 40
70 crimp surface inside the top mount 20 for attachment of OEM air spring 50
80 OEM top mount air spring crimp right secures the OEM air spring 50 into the top mount 20
90 Assembled replacement air spring assembly with crimp adapter 130
100 modified crimp ring attaches air spring bag/bladder110 to the piston
110 air spring bladder/bag
130 crimp adapter
135 external threads on crimp adapter 130 thread into inner crimp adapter 160 inner threads 170
140 x-ring seals crimp ring crimps air spring bag/bladder 110 to crimp adapter 130. Crimp adapter
150 adapter crimp ring crimps air spring bag/bladder 110 to crimp adapter 130
160 inner crimp adapter
165 outer groove of inner crimp adapter 160. This groove adapts into the OEM crimp ring 80 in the top mount after the OEM air spring 50 is cut free of the top mount 20. This leaves a remnant of the OEM air spring bag/bladder 155 intact to maintain the seal between the OEM crimp ring 80 and the top mount 20.
170 inner crimp adapter threads.
200 air spring/crimp adapter assembly
210 inner crimp adapter 130 is somewhat flexible and can be slightly collapsed for installation to the top mount crimp ring 80. This is the collapsed inner ring adapter.
220 air spring mount flange on crimp adapter 130.

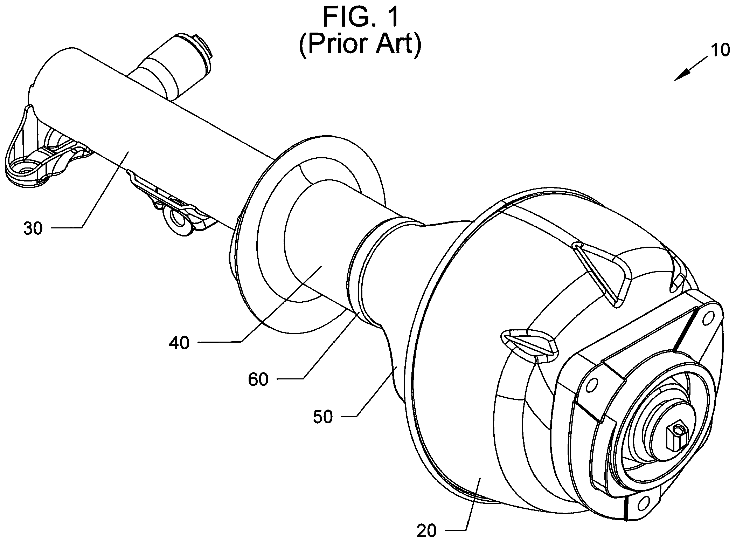

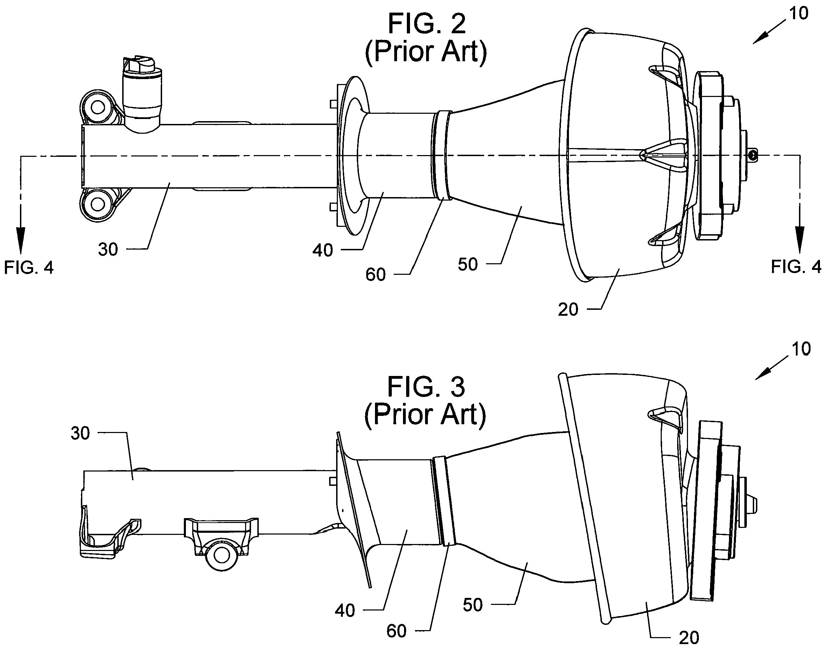

FIG. 1 is an upper front right perspective view of a prior art, original equipment manufacturer (OEM) air shock/air spring assembly 10. FIG. 2 is a top view of the (OEM) air shock/air spring assembly 10 of FIG. 1. FIG. 3 is a front view of the (OEM) air shock/air spring assembly 10 of FIG. 1.

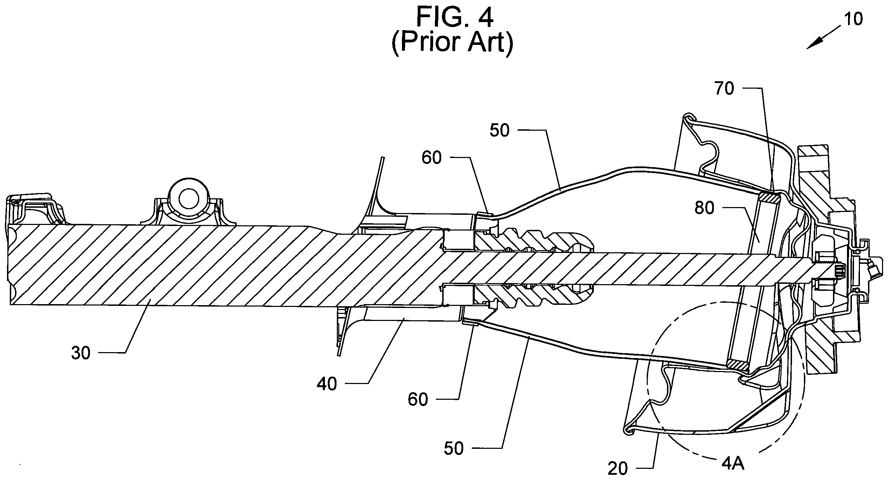

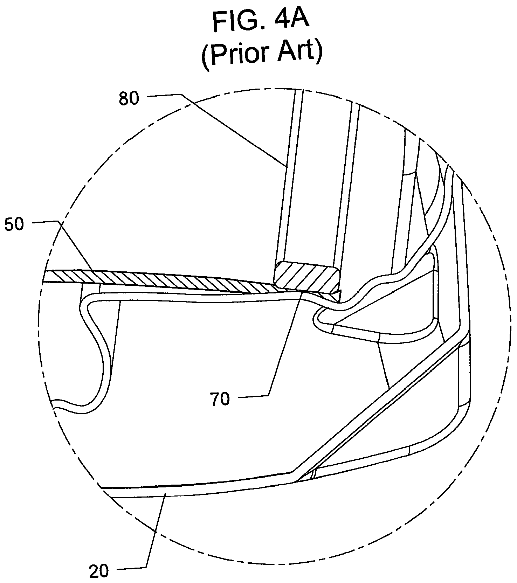

FIG. 4 is a cross-sectional view of the (OEM) air shock/air spring assembly 10 of FIG. 2 along arrows 4X. FIG. 4A is an enlarged view of a portion of the cross-sectional view of the air shock/air spring assembly 10 of FIG. 4.

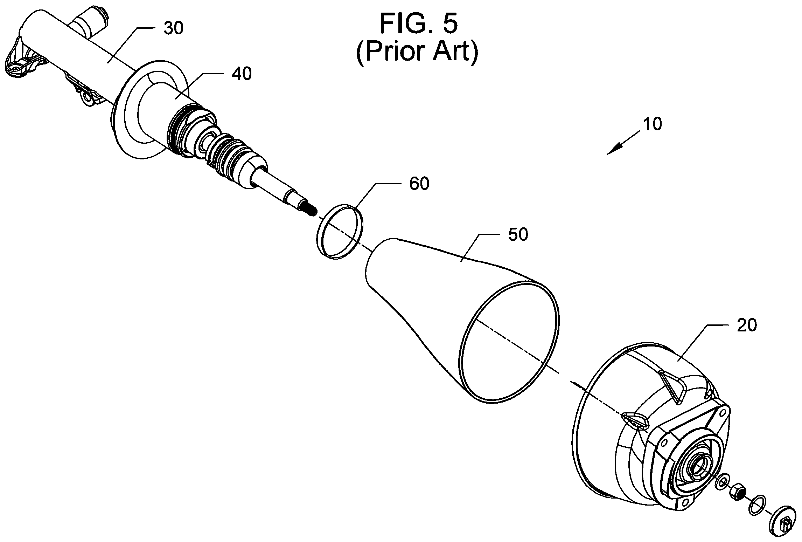

FIG. 5 is an exploded perspective view of the prior art (OEM) air shock/air spring assembly 10 of FIG. 1.

Referring to FIGURES 1-5, the prior art OEM air shock/air spring assembly 10 can include a top mount 20 and lower mount portion 30 (OEM shock assembly) with a piston portion 40. An inflatable air spring bladder/bag 50 can have a lower portion attached to the piston portion by a crimp ring 60. The upper end of the air spring bladder/bag 50 can held in place by the outwardly extending surface of a top mount air spring crimp ring 80 which pushes outward against an inside surface of the top mount forming a crimp surface 70.

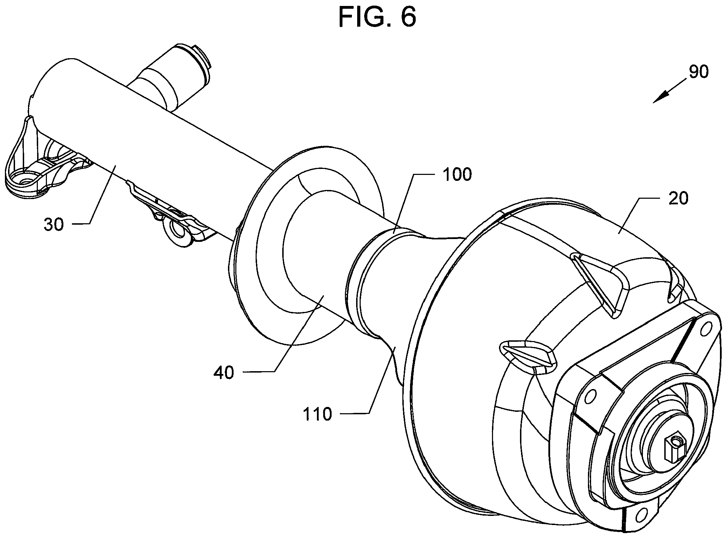

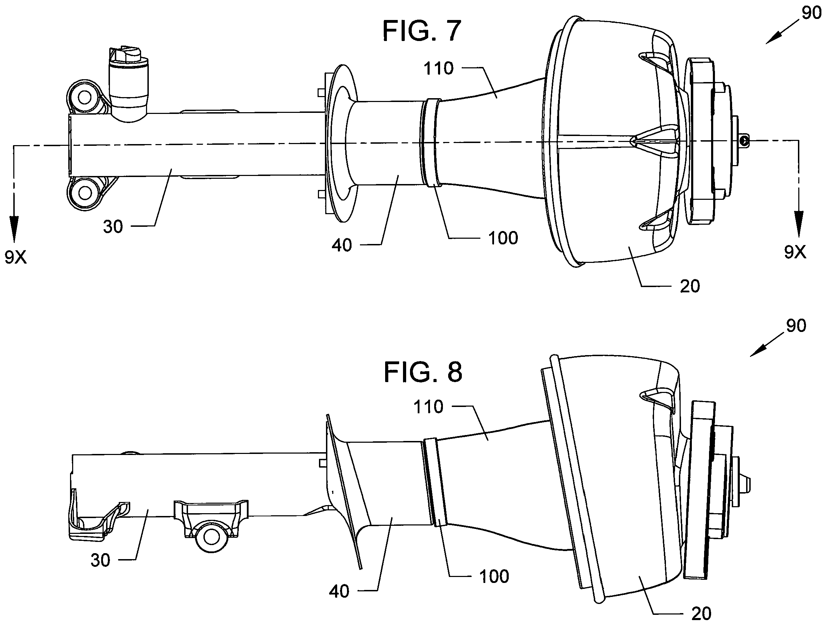

FIG. 6 is an upper front right perspective view of an assembled air shock/air spring replacement assembly 90 using the novel adapter ring adapter 130. FIG. 7 is a top view of the assembled replacement air shock/air spring assembly 90 of FIG. 6. FIG. 8 is a front view of the assembled replacement air shock/air spring assembly 90 of FIG. 6.

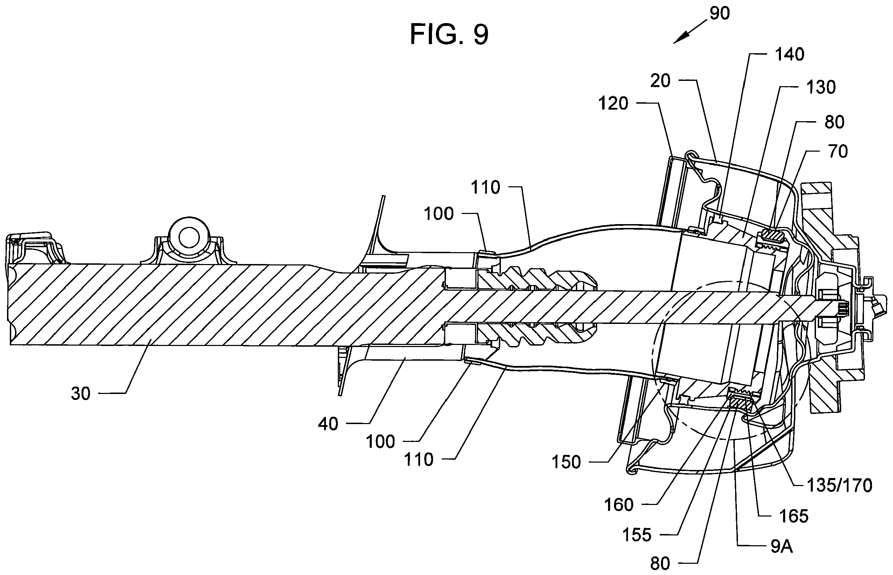

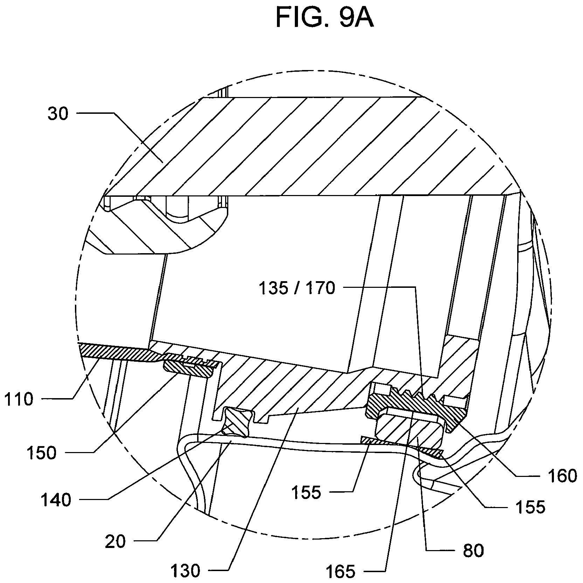

FIG. 9 is a cross-sectional view of the assembled replacement air shock/air spring assembly 90 of FIG. 7 along arrows 9X. FIG. 9A is an enlarged view of a portion of the cross-sectional view of the air shock/air spring assembly 90 of FIG. 9.

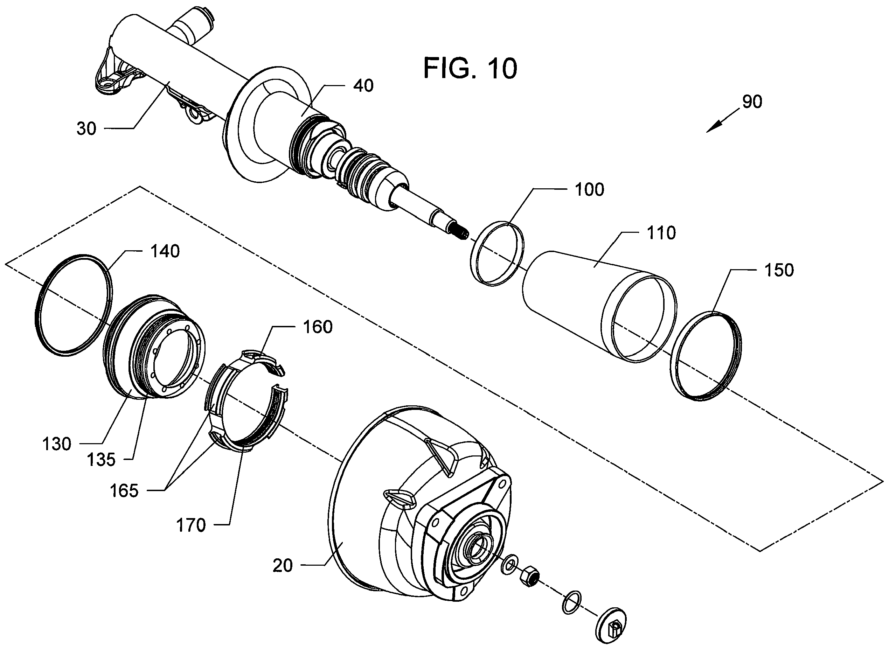

FIG. 10 is an exploded perspective view of the air shock/air spring assembly 90 of FIG. 6.

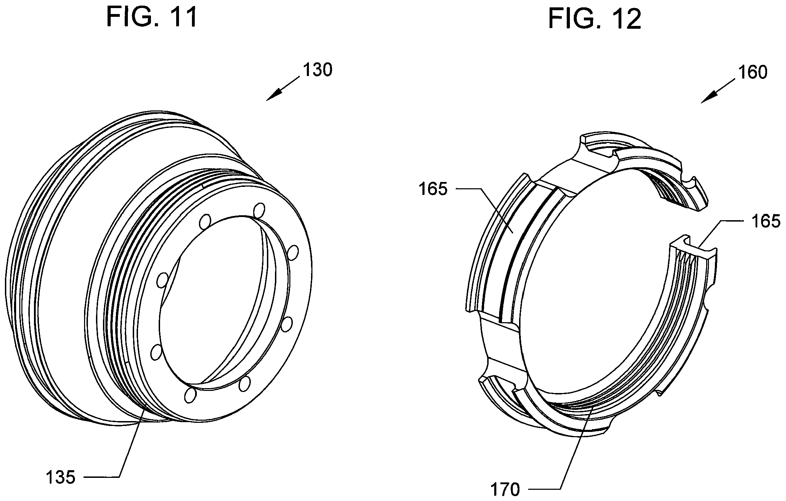

FIG. 11 is an enlarged perspective view of the crimp adapter part 130 of the air shock/air spring of FIG. 10. FIG. 12 is an enlarged perspective view of the inner crimp ring adapter part 160 of the air shock/air spring of FIG. 10.

FIG. 12 is an enlarged perspective view of the inner crimp ring adapter 160 part of the air shock/air spring of FIG. 10.

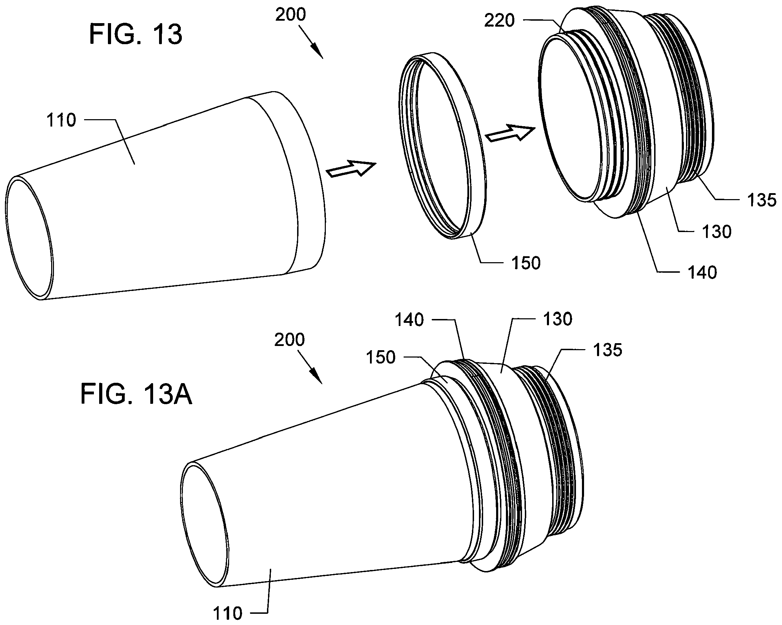

FIG. 13 is an exploded view of the air shock/air spring 110, crimp ring 150 and crimp adapter 130 before the air shock/air spring 110 is attached to the crimp adapter 130. FIG. 13A is an assembled view of the air shock/air spring 110, crimp ring 150 and crimp adapter 130 of FIG. 13.

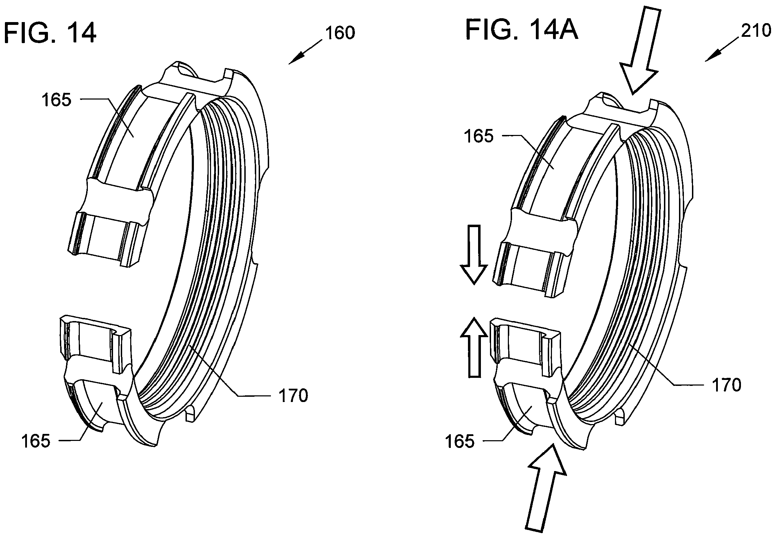

FIG. 14 is a perspective view of the inner crimp ring adapter 160. FIG. 14A is another perspective view of the inner crimp ring adapter 160 of FIG. 14 showing pressure arrows applied at the top and bottom forming a slightly collapsed crimp ring adapter 210. The pressure slightly collapses the crimp ring adapter 160 into a slightly collapsed crimp ring adapter 210 in preparation for assembly into the OEM top mount 20.

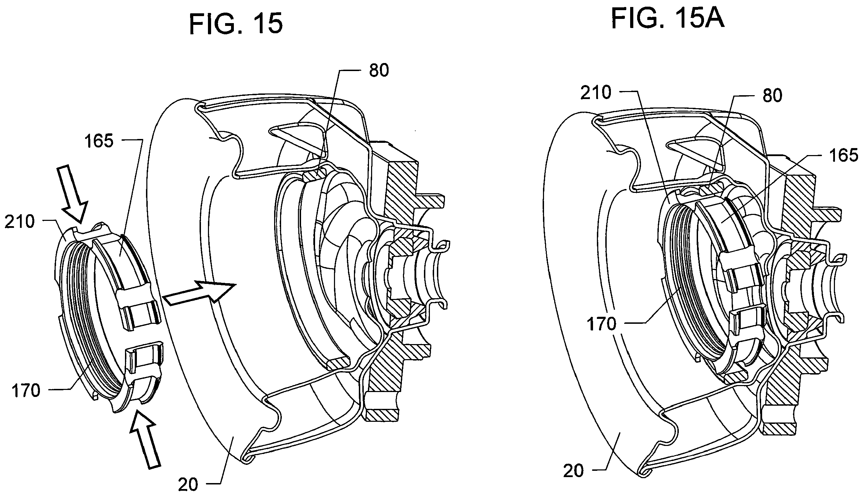

FIG. 15 is an exploded perspective view of the collapsed crimp ring adapter 210 positioned to be inserted into the OEM top mount 20, with the OEM top mount shown 20 in partial cross-section. FIG. 15A is an assembled perspective view of the slightly collapsed crimp ring adapter 210 inserted inside the OEM top mount 20 of FIG. 15, and aligned with the top mount air spring crimp ring 80 ready to expand and secure itself to the top mount 20.

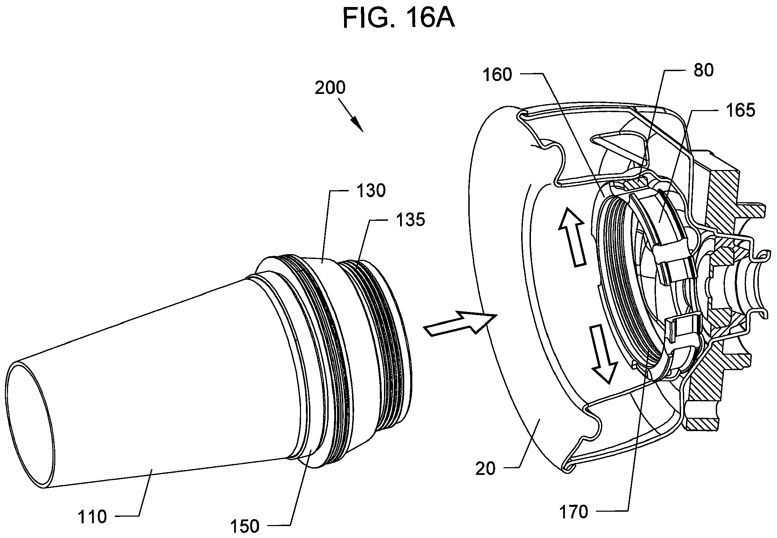

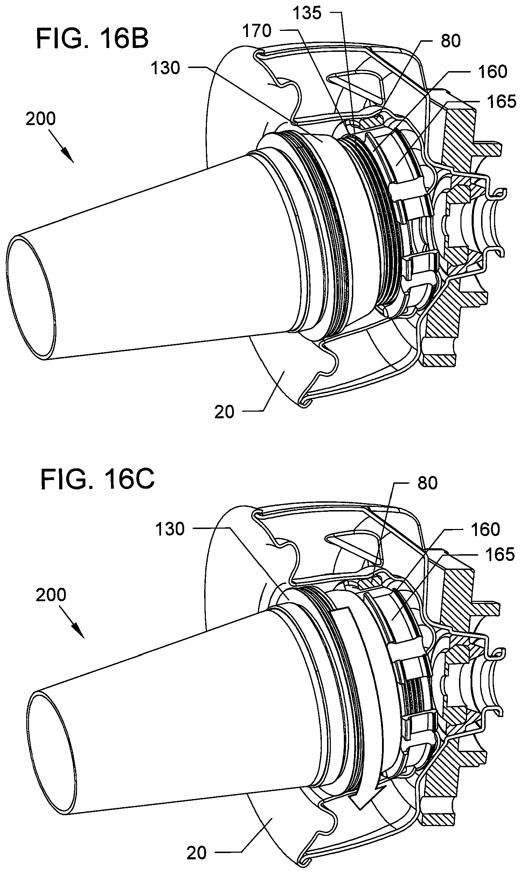

FIG. 16A is an exploded perspective view of the assembled air shock/air spring 110, crimp ring 150 and crimp adapter 130 of FIG. 13A about to be positioned into the expanded inner crimp adapter inside the OEM top mount 20 of FIG. 15A. FIG. 16B is a perspective view showing the exterior threads 135 of the air spring/crimp adapter assembly 200 are starting to engage the interior threads 170 of the inner crimp adapter 160 of FIG. 16A. FIG. 16C is a perspective view of the air spring/crimp adapter assembly 200 having been threaded into the inner crimp adapter 160 that was previously secured into the OEM top mount 20. The motion arrow shows the rotating threading direction.

Referring to FIGURES 1-16C, the installation steps of disassembling the OEM air shock/air spring assembly 10 and remanufacturing a replacement air shock/air spring assembly 90 will now be described.
1. Remove existing OEM crimp ring 60 attaching the OEM air spring 50 to the OEM piston 40.
2. Disconnect top mount 20 from OEM shock assembly 10.
3. Cut the OEM air spring bladder 50 from the inside of the top mount 20 near the top mount crimp ring 80 leaving a remnant 155 still crimped inside the top mount 20.
4. Install the inner crimp adapter 160 into the top mount 20 by compressing the crimp adapter 160 and fitting it inside of the top mount 20 such that the channel/groove 165 on the outside of the inner crimp adapter 160 fits over the top mount crimp ring 80 securing the inner crimp adapter 160 inside the top mount 20.
5. Crimp the large end of the replacement air spring bag/bladder 110 to the flange on the non-threaded end of the crimp adapter 130 securing with crimp ring 150.
6. Install an X-ring seal 140 into the groove of the crimp adapter 130. Lubricate the ring before installation.
7. Thread the outside threads of the crimp adapter 130 to the inside threads of the inner crimp adapter 160 previously secured into the top mount 20. Insure that the X-ring seal 140 seals to the inside wall of the top mount 20.
8. Feed a modified crimp ring 100 and the top mount assembly 20, with the newly installed components, over the exposed end of the OEM shock assembly 30 shaft. Secure the top mount assembly 20 to the OEM shock 30 shaft.
9. Crimp the small upper end of the air spring bag/bladder 110 to the OEM piston 40 using the modified crimp ring 100.

Although specific advantages have been enumerated above, various embodiments may include some, none, or all of the enumerated advantages.

Other technical advantages may become readily apparent to one of ordinary skill in the art after review of the following figures and description.

It should be understood at the outset that, although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described below.

Unless otherwise specifically noted, articles depicted in the drawings are not necessarily drawn to scale.

Modifications, additions, or omissions may be made to the systems, apparatuses, and methods described herein without departing from the scope of the disclosure. For example, the components of the systems and apparatuses may be integrated or separated. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

To aid the Patent Office and any readers of any patent issued on this application in interpreting the claims appended hereto, applicants wish to note that they do not intend any of the appended claims or claim elements to invoke 35 U.S.C. 112(f) unless the words "means for" or "step for" are explicitly used in the particular claim.

While the invention has been described, disclosed, illustrated and shown in various terms of certain embodiments or modifications which it has presumed in practice, the scope of the invention is not intended to be, nor should it be deemed to be, limited thereby and such other modifications or embodiments as may be suggested by the teachings herein are particularly reserved especially as they fall within the breadth and scope of the claims here appended.

## Claims

1. A remanufactured air shock, comprising:
a top mount having a closed outer end and an opposite end having a cavity with an existing crimp ring inside of the top mount;
a lower shock assembly;
a piston between the lower shock assembly and the top mount;
a replacement air spring bladder having a lower end attached to the piston, and an upper end;
a crimp adapter ring assembly for attaching the upper end of the replacement air spring bladder inside of the cavity, wherein the crimp adapter ring assembly is used for replacing an existing OEM (original equipment manufacturer) air spring bladder with the replacement air spring bladder.

2. The remanufactured air shock of claim 1, further comprising:
a lower crimp ring for attaching the lower end of the replacement air spring bladder to the piston assembly.

3. The remanufactured air shock of claim 1, wherein the crimp ring adapter assembly includes:
a crimp adapter having a lower neck portion, and an upper end with external threads thereon, the upper end of the replacement air spring bladder being attached to the lower neck portion of the crimp adapter by another crimp ring; and
an upper crimp ring having internal threads for threading about the external threads on the crimp adapter, the upper crimp ring having an outer groove which is snapable about the existing crimp ring inside of the top mount.

4. The remanufactured air shock of claim 1, further comprising:
a lower crimp ring for attaching the lower end of the replacement air spring bladder to the piston assembly, and wherein the crimp ring adapter assembly includes:
a crimp adapter having a lower neck portion, and an upper end with external threads thereon, the upper end of the replacement air spring bladder being attached to the lower neck portion of the crimp adapter by another crimp ring, and
an upper crimp ring having internal threads for threading about the external threads on the crimp adapter, the upper crimp ring having an outer groove which is snapable about the existing crimp ring inside of the top mount.

5. The remanufactured air shock of claim 1, wherein a portion of the existing OEM air spring bladder remains inside of the remanufactured air shock.

6. The remanufactured air shock of claim 5, wherein a remaining portion of the existing OEM air spring bladder is cut out from the remanufactured air shock.

7. A method of disassembling and remanufacturing an air shock, comprising the steps of:
providing an OEM (original equipment manufacturer) air shock assembly with a top mount and a lower mount and a piston assembly;
providing the OEM air shock assembly with an OEM air spring bag having an upper end attached inside of the top mount and a bottom end attached to the piston assembly; and
replacing the OEM air spring bag with a replacement air spring bag so that a remanufactured air shock is assembled.

8. The method of claim 7, wherein the replacing step includes the step of:
cutting an upper end portion of the OEM air bag from an internal crimp ring inside of the top mount, and leaving a remnant of the OEM air bag inside the top mount.

9. The method of claim 7, wherein the replacing step includes the step of:
providing a lower crimp ring for attaching a lower end of the replacement air spring bladder to the piston assembly.

10. The method of claim 7, wherein the replacing step includes the step of:
providing a crimp adapter having a lower neck portion and an upper end with external threads thereon;
attaching the upper end of the air spring bladder to the lower neck portion of the crimp adapter by another crimp ring;
providing an upper crimp ring having internal threads for threading about the external threads on the upper end of the crimp adapter, the upper crimp ring having an outer groove;
pushing the upper end of the crimp adapter with the upper crimp ring into a lower cavity of the top mount; and
snapping the outer groove of the internal crimp ring inside of the top mount which results in a remanufactured air shock assembly.

11. A remanufactured air spring using most parts of an existing air spring, comprising:
an existing top mount of the existing air spring having an outer end and an opposite end having a cavity with an existing crimp ring inside of the top mount;
an existing lower shock assembly of the existing air spring;
an existing piston between the existing lower shock assembly and the existing top mount;
a replacement air spring bladder having a lower end attached to the existing piston, and an upper end; and
a crimp adapter ring assembly for attaching the upper end of the replacement air spring bladder inside of the cavity of the existing air spring, while allowing a portion of an existing air spring bladder to remain inside of the existing top mount of the existing air spring.

12. The remanufactured air spring of claim 11, further comprising:
a lower crimp ring for attaching the lower end of the replacement air spring bladder to the existing piston assembly.

13. The remanufactured air spring of claim 11, wherein the crimp ring adapter assembly includes:
a crimp adapter having a lower neck portion, and an upper end with external threads thereon, the upper end of the replacement air spring bladder being attached to the lower neck portion of the crimp adapter by another crimp ring; and
an upper crimp ring having internal threads for threading about the external threads on the crimp adapter, the upper crimp ring having an outer groove which is snapable about the existing crimp ring inside of the top mount of the existing air spring.

14. The remanufactured air spring of claim 11, further comprising:
a lower crimp ring for attaching the lower end of the replacement air spring bladder to the existing piston assembly, and wherein the crimp ring adapter assembly includes:
a crimp adapter having a lower neck portion, and an upper end with external threads thereon, the upper end of the replacement air spring bladder being attached to the lower neck portion of the crimp adapter by another crimp ring, and
an upper crimp ring having internal threads for threading about the external threads on the crimp adapter, the upper crimp ring having an outer groove which is snapable about the existing crimp ring inside of the existing top mount of the existing air spring.

15. The remanufactured air spring of claim 1, wherein a remaining portion of the existing OEM air spring bladder is cut out from the existing top mount for the remanufactured air spring.
